# EUROPÄISCHE PATENTANMELDUNG

(11) **EP 0 936 723 A1**
(43) Veröffentlichungstag der Anmeldung: **18.08.1999**
(21) Anmeldenummer: 99101924.1
(22) Anmeldetag: 29.01.1999
(51) Int. Cl.: H02K 29/08

(54) **Bürstenloser Gleichstrommotor**

(30) Priorität: 11.02.1998 DE 29802297 U
(71) Anmelder: MAN Roland Druckmaschinen AG, 63075 Offenbach (DE)
(72) Erfinder: Schlegel, Christian, 63128 Dietzenbach (DE)
(74) Vertreter: Stahl, Dietmar

(57) **Zusammenfassung**

Beschrieben wird ein bürstenloser Gleichstrommotor für eine Druckmaschine, insbesondere Bogenoffsetdruckmaschine, mit die Lage des Rotors über dessen Magnetfeld erfassenden Kommutierungsgebern. Ein derartiger Motor soll dahingehend weitergebildet werden, daß sich eine kostengünstige, technisch einfache sowie zuverlässige Ausbildung zur Gewinnung von Kommutierungssignalen ergibt. Erfindungsgemäß gelingt dies dadurch, daß die Kommutierungsgeber an einem stirnseitigen Ende des Motors beabstandet zum Rotor angeordnet sind, und daß zwischen den Kommutierungsgebern und den entsprechend zu detektierenden Bereichen des Rotors magnetisch leitende Einlegteile angeordnet sind.

## Beschreibung

Die Erfindung betrifft einen bürstenlosen Gleichstrommotor für eine Druckmaschine gemäß dem Oberbegriff von Anspruch 1.

Bürstenlose Gleichstrommotoren finden bei Druckmaschinen, insbesondere Bogenoffsetdruckmaschinen an vielen Stellen Anwendung. So zum Beispiel als Positionierantriebe bzw. als Antriebe für Gebläse. Der Vorteil der bürstenlosen Gleichstrommotoren liegt in der langen Lebensdauer. Ferner ist es auch möglich, bürstenlose Gleichstrommotoren ohne zusätzliche Positionsgeber (Drehpoti oder dergleichen) als Positionierantrieb einzusetzen, indem die dem Motor zugeführten Kommutierungsschritte aufsummiert werden, woraus sich die Positionen eines vom Motor getriebenen Gliedes errechnen läßt.

Bei einem bürstenlosen Gleichstrommotor erfolgt bekanntlich die Kommutierung durch entsprechendes Schalten des Ständerfeldes, d.h. entsprechend der Winkellage des Rotors werden die Ständerwicklungen umgepolt. Dazu ist es erforderlich, ein Lagesignal des Rotors zu generieren und dies einer entsprechenden Kommutierungselektronik zuzuführen. Diese schaltet dann entsprechend der Rotorlage die die Bestromung der Ständerwicklung bewirkenden Endstufen.

Zur Bildung von Rotorlagesignalen ist es bekannt, bei bürstenlosen Gleichstrommotoren als Hall-Sensoren ausgebildete Kommutierungsgeber mit einem auf der Rotorwelle angebrachten Kommutierungsmagnet (Scheibenmagnet) zusammenwirken zu lassen. Die Hall-Sensoren können hierbei vorteilhafterweise als SMD-Bauteil direkt auf einer Steuerplatine angebracht sein, wobei die Steuerplatine im geringen Abstand parallel zur Ringscheibe des Kummutierungsmagneten angeordnet ist. Es sind so keine zusätzlichen Kontaktierungen zwischen der Steuerplatine und den auf der Steuerplatine angebrachten Kommutierungsgeber (Hall-Sensoren) nötig. Nachteilig ist aber, daß ein zusätzlicher Kommutierungsmagnet notwendig ist, der bezüglich seiner Winkellage zum Rotor justiert werden muß. Dies erhöht sowohl die Bauteil- als auch die Herstellungskosten.

Alternativ dazu ist es auch möglich, die Kommutierungsgeber (Hall-Sensoren) direkt mit dem Rotor des Motors zusammenwirken zu lassen. Bei einer derartigen Ausbildung der Kommutierungsgeber zur Rotorlage-Signalgewinnung müssen die Hall-Sensoren in der Nähe des Rotors im Statorbereich angeordnet sein, so daß eine zusätzliche Kontaktierung zu einer die Kommutierungselektronik tragenden Steuerplatine nötig ist. Dies wirkt sich negativ auf die Herstellungskosten sowie die Zuverlässigkeit einer derartigen Einrichtung aus.

Aufgabe der vorliegenden Erfindung ist es daher, einen bürstenlosen Gleichstommotor gemäß dem Oberbegriff von Anspruch 1 derartig zu erweitern, so daß sich eine kostengünstige, technisch einfache sowie zuverlässige Ausbildung zur Gewinnung von Kommutierungssignalen ergibt.

Gelöst wird diese Aufgabe durch die kennzeichnenden Merkmale von Anspruch 1. Weiterbildungen der Erfindung ergeben sich aus den Unteransprüchen.

Nach der Erfindung ist vorgesehen, daß die als Hall-Sensoren ausgebildeten Kommutierungsgeber auf einer vom Rotor beabstandet angeordneten Steuerungsplatine angebracht sind und durch magnetisch leitende Einlegteile (Magnetleiter) mit dem Magnetfeld des Rotors verbunden sind. Dadurch ist es möglich, daß die Hall-Sensoren die entsprechende Rotorlage so tasten können, als wären sie im Bereich des Rotors angeordnet. Als Vorteil ist hierbei anzusehen, daß keine zusätzlichen Kontaktierungen nötig sind, welche die Zuverlässigkeit des Gesamtsystems reduzieren und ferner den Herstellungsaufwand erhöhen. Die erfindungsgemäß zu verwendeten magnetisch leitenden Einlegteile (weichmagnetisches Material, Weicheisen) sind dabei kostengünstig herzustellen und leiten einen Teil der magnetischen Kraftlinien in den Bereich der die Kommutierungsgeber darstellenden Hall-Sensoren.

Durch die Erfindung ist es möglich, die als Hall-Sensoren ausgebildeten Kommutierungsgeber auf einer Steuerplatine anzuordnen, wobei diese Steuerplatine die Endstufen zur Bestromung der Statorwicklungen umfaßt. Die Anordnung der Kommutierungsgeber auf der Steuerungsplatine kann dabei derartig ausgeführt sein, wie dies bei einem bürstenlosen Gleichstrommotor der Fall ist, welcher einen zusätzlichen Kommutierungsmagnet in Form einer der Steuerplatine nebst Hall-Sensoren zuordneten Ringscheibe aufweist. Da ein derartiger Kommutierungsmagnet nicht vorzusehen ist, entfällt zusätzlich auch eine sonst notwendige Justage zwischen Kommutierungsmagnet und Rotor.

Nach der Erfindung ist bevorzugt vorgesehen, daß als magnetisch leitende Einlegteile entsprechend geformte Teile aus Weicheisen verwendet wird. Ein derartiges Material leitet einen Teil des am Rotor auftretenden Magnetfeldes nach außen an diejenige Stellen, an der der Kommutierungsgeber (Hall-Sensoren) auf der Steuerplatine angebracht sind. Da die Feldstärke am Ende der Einlegteile geringer ist als direkt am Rotor, werden entsprechend empfindlichere Sensoren (Hall-Sensoren) verwendet.

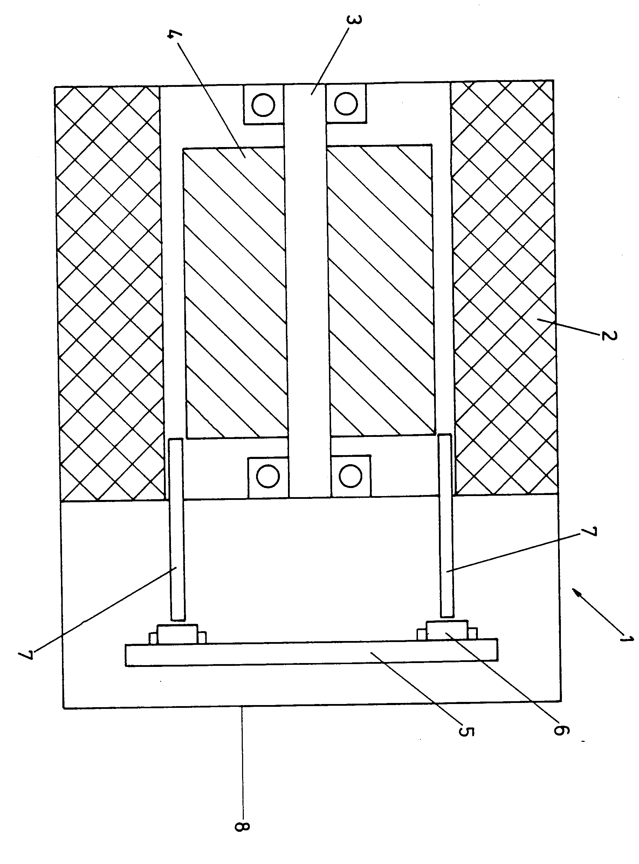

Desweiteren erfolgt die Erläuterung eines Ausführungsbeispiels der Erfindung anhand der einzigen Zeichnung. Diese zeigt prinzipiell einen bürstenlosen Gleichstrommotor mit den erfindungsgemäß vorgesehenen Einlegteilen.

Ein prinzipiell dargestellter bürstenloser Gleichstrommotor 1 weist in an sich bekannter Weise einen Stator 2 mit einem auf einer drehbar gelagerten Rotorwelle 3 angeordneten Rotor 4 in Form eines Permanentmagneten mit entsprechender Polzahl auf. Unter einem ein Ende des bürstenlosen Gleichstrommotors 1 abschließenden Gehäuse 8 ist eine die Steuerung (Kommutatorelektronik) des bürstenlosen Gleichstrommotors1 aufweisende Platine 5 angeordnet, welche beabstandet zu den Wicklungen des Stators 2 sowie des Rotors 4 angebracht ist. Auf der dem Rotor 4 zugewandten Seite der Platine 5 sind entsprechend der Polzahl des Rotors 4 Kommutierungsgeber 6 in Form von Hall-Sensoren angeordnet, wobei diese Kommutierungsgeber 6 bevorzugt in SMD-Technik direkt auf der Oberfläche der Platine 5 kontaktiert sind.

Zwischen dem der Platine 5 zugewandten stirnseitigen Ende des Rotors 4 und den sensitiven Oberflächenbereichen der Kommutierungsgeber 6 sind stabförmige magnetisch leitende Einlegteile 7 angeordnet, durch welche ein Teil des am Rotor (den Rotorpolen) austretenden Magnetfeldes zu den als Hall-Sensoren ausgebildeten Kommutierungsgebern 6 geleitet wird. Diese sind in ihrer Empfindlichkeit an die an den Polenden der magnetisch leitenden Einlegteilen 7 vorliegende Feldstärke (Flußdichte) angepasst. Die magnetisch leitenden Einlegteile bestehen bevorzugt aus Weicheisen oder einem ähnlich gut den magnetischen Fluß leitenden Material.

### Bezugszeichenliste

- 1: Bürstenloser Gleichstrommotor
- 2: Stator
- 3: Rotorwelle
- 4: Rotor
- 5: Platine (Kommutierungselektronik)
- 6: Kommutierungsgeber (Hall-Sensor)
- 7: magnetisch leitendes Einlegteil
- 8: Gehäuse (Abdeckung)

## Patentansprüche

1. Bürstenloser Gleichstrommotor für eine Druckmaschine, insbesondere Bogenoffsetdruckmaschine, mit die Lage des Rotors über dessen Magnetfeld erfassenden Kommutierungsgebern,
**dadurch gekennzeichnet,**
daß die Kommutierungsgeber (6) an einem stirnseitigen Ende des Motors (1) beabstandet zum Rotor (4) angeordnet sind, und daß zwischen den Kommutierungsgebern (6) und den entsprechend zu detektierenden Bereichen des Rotors (4) magnetisch leitende Einlegteile (7) angeordnet sind.

2. Bürstenloser Gleichstrommotor nach Anspruch 1,
**dadurch gekennzeichnet,**
daß die Kommutierungsgeber (6) als Hall-Sensoren ausgebildet sind, wobei deren Empfindlichkeit an die durch die magnetische leitende Einlegteile (7) reduzierte Feldstärke angepaßt ist.

3. Bürstenloser Gleichstrommotor nach Anspruch 1 oder 2,
**dadurch gekennzeichnet,**
daß die magnetisch leitende Einlegteile (7) aus Weicheisen bestehen.

4. Bürstenloser Gleichstrommotor nach einem der vorhergehenden Ansprüche,
**dadurch gekennzeichnet,**
daß die magnetisch leitenden Einlegteile (7) zwischen Rotor (4) und den Kommutierungsgebern (6) stabförmig ausgebildet sind.

5. Bürstenloser Gleichstrommotor nach einem der vorhergehenden Ansprüche,
**dadurch gekennzeichnet,**
daß die Kommutierungsgeber (6) auf einer dem stirnseitigen Ende des Rotors (4) beabstandet angeordneten Platine (5) angebracht sind.
